(19) Europäisches Patentamt / European Patent Office / Office européen des brevets

(11) **EP 2 952 781 B1**

(12) **EUROPEAN PATENT SPECIFICATION**

(45) Date of publication and mention
of the grant of the patent:
**28.02.2018 Bulletin 2018/09**

(51) Int Cl.:
*F16H 57/01* (2012.01)    *G05B 23/02* (2006.01)
*F03D 9/00* (2016.01)    *F03D 13/00* (2016.01)
*F03D 15/00* (2016.01)

(21) Application number: **15169755.4**

(22) Date of filing: **29.05.2015**

(54) **CUMULATIVE DAMAGE LEVEL EVALUATION SYSTEM AND METHOD**

KUMULATIVES BESCHÄDIGUNGSGRADBEURTEILUNGSSYSTEM UND VERFAHREN

SYSTÈME D'ÉVALUATION ET MÉTHODE DE NIVEAU DE DOMMAGES CUMULATIFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.06.2014 JP 2014115265**

(43) Date of publication of application:
**09.12.2015 Bulletin 2015/50**

(73) Proprietor: **MITSUBISHI HEAVY INDUSTRIES,
LTD.
Tokyo 108-8215 (JP)**

(72) Inventors:
  • **NAKAYAMA, Shin**
    **TOKYO, 108-8215 (JP)**
  • **UEHARA, Osamu**
    **TOKYO, 108-8215 (JP)**
  • **OCHIAI, Hiroyasu**
    **TOKYO, 108-8215 (JP)**
  • **SHIMIZU, Masayuki**
    **TOKYO, 108-8215 (JP)**
  • **SASAKI, Masashi**
    **TOKYO, 108-8215 (JP)**
  • **UCHIDA, Michiya**
    **TOKYO, 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A2- 2 631 477      WO-A1-2012/164789
WO-A1-2014/002522    WO-A2-2006/124746
WO-A2-2012/000506    DE-A1- 19 730 492
DE-A1-102005 059 564  JP-A- S57 191 483
US-A1- 2005 262 838**

**Description**

TECHNICAL FIELD

The present disclosure relates to a cumulative damage level evaluation system, a renewable energy power generating apparatus, a method of evaluating a cumulative damage level and a method of controlling a hydraulic machine.

BACKGROUND

A hydraulic machine generally has features that allow it to exert great power with a relatively small structure, and that its output and velocity are easily controlled, for instance. Hydraulic machines are conventionally used for various purposes.

Patent Document 1 discloses a wind turbine power generating apparatus configured to transmit rotational energy of a wind turbine rotor to a generator with a hydraulic transmission in which a variable-displacement hydraulic pump and a variable-displacement hydraulic motor, each of which serving as a hydraulic machine, are combined. The hydraulic pump includes a plurality of pistons and a cylinder block. Further, the cylinder block includes a plurality of cylinders for forming a plurality of hydraulic chambers with the pistons and guiding reciprocating motion of the respective pistons, and a plurality of high pressure valves and a plurality of low pressure valves for switching the pressures of the respective hydraulic chambers. The output of the hydraulic pump is adjusted by varying the operation state of each hydraulic chamber.

Citation List

Patent Literature

Patent Document 1: WO2014/002522A

WO2006/124746 discloses a system and method for power pump performance monitoring and analysis.

SUMMARY

Meanwhile, the cumulative fatigue damage rule is known as a method for evaluating a fatigue lifetime of a member of a machine. The cumulative fatigue damage rule is to calculate a cumulative damage level of a member of a machine taking account of a stress amplitude obtained from a stress waveform inputted into the member of the machine and occurrence frequency of the stress amplitude.

However, stress distribution varies in accordance with the operation state of each hydraulic chamber, in a cylinder block of a variable-displacement hydraulic pump as described in Patent Document 1. Thus, if the above common evaluation method is directly applied to a cylinder block of a variable-displacement hydraulic pump, it may not be possible to obtain a cumulative damage level taking account of the operation state of each hydraulic chamber.

In view of the above issues, an object of at least one embodiment of the present invention is to provide a cumulative damage level evaluation system for a hydraulic machine which can evaluate a total cumulative damage level over an entire evaluation period of each evaluation point of a cylinder block, appropriately taking account of an operation state of each hydraulic chamber in the entire evaluation period.

(1) A cumulative damage level evaluation system for a hydraulic machine according to at least one embodiment of the present invention is for a hydraulic machine which includes a plurality of pistons and at least one cylinder block. The at least one cylinder block includes a plurality of cylinders for forming a plurality of hydraulic chambers with the plurality of pistons and guiding reciprocating motion of the respective pistons. The at least one cylinder block also includes a plurality of high pressure valves and a plurality of low pressure valves for switching a pressure of each of the plurality of hydraulic chambers. The cumulative damage level evaluation system includes: an availability information acquisition part configured to obtain availability information which indicates an availability of each of the hydraulic chambers in an entire evaluation period; and a total cumulative damage level evaluation part configured to evaluate a total cumulative damage level over the entire evaluation period of each of evaluation points of the cylinder block based on the availability information obtained by the availability information acquisition part.

The stress distribution in a cylinder block of a hydraulic machine varies in accordance with the operation state of each hydraulic chamber. Thus, the availability over the entire evaluation period of each hydraulic chamber affects the total cumulative damage level over the entire evaluation period at each position in the cylinder block.

In view of this, in the cumulative damage level evaluation system described in the above (1), availability information indicating the availability of each hydraulic chamber in an entire evaluation period is obtained by the availability information acquisition part, and the total cumulative damage level over the entire evaluation period of each evaluation point on the cylinder block is evaluated by the total cumulative damage level evaluation part based on the availability information. In this way, it is possible to evaluate the total cumulative damage level over the entire evaluation period of each evaluation point of the cylinder block, appropriately taking account of the operation state of each hydraulic chamber in the entire evaluation period.

(2) The cumulative damage level evaluation system for a hydraulic machine according to the above (1) further includes a control part configured to control at least one of the plurality of high pressure valves or the plurality of low pressure valves in accordance with an operation pattern of the plurality of hydraulic chambers in the cylinder block.

When the total cumulative damage level over the entire evaluation period of at least one of the evaluation points of the cylinder block is greater than a threshold value, the control part is configured to determine an operation pattern whereby it is possible to avoid stress concentration to the at least one evaluation point at which the cumulative damage level is greater than the threshold value.

According to the cumulative damage level evaluation system described in the above (2), stress concentration to a portion where fatigue has been already accumulated in the cylinder blocks is avoided, so that it is possible to restrict breakage of the cylinder block effectively, which makes it possible to improve the lifetime of the entire cylinder block and to reduce the frequency of maintenance.

Here, "operation pattern" may be a distribution of active cylinders in the cylinder block in a case where each hydraulic chamber is controlled to be switched between an active state and a non-active state in the cylinder block (digital control). Alternatively, it may be a distribution of an active rate of each hydraulic chamber in the cylinder block in a case where a partial stroke control is performed on each hydraulic chamber (i.e., output of a hydraulic machine is controlled by adjusting a ratio of a displacement per single stroke of a piston to the maximum displacement).

(3) In some embodiments, in the cumulative damage level evaluation system for a hydraulic machine according to the above (2), the control part is configured to generate a notification signal for warning when an increasing speed of the total cumulative damage level over the entire evaluation period of at least one of the evaluation points of the cylinder block is greater than a threshold value.

When an increasing speed of the total cumulative damage level of at least one evaluation point of the cylinder block has exceeded a threshold value, it is estimated that a trouble which may generate unexpected stress distribution has occurred in the hydraulic machine. Thus, the control part of the cumulative damage level evaluation system described in the above (3) generates a notification signal for warning in such a case, which makes it possible to carry out a suitable measure such as shutdown and maintenance of the hydraulic machine in response to the warning.

(4) In some embodiments, in the cumulative damage level evaluation system for a hydraulic machine according to any one of the above (1) to (3), the control part is configured to control a displacement of the hydraulic machine by adjusting F(x) which indicates a ratio of "n-x" to "n" in each unit period, where "n" is the total number of the hydraulic chambers and "x" is the number of hydraulic chambers which maintain a state in which the corresponding high pressure valve is closed and the corresponding low pressure valve is open during a cycle in which the corresponding piston moves from a dead bottom center to a top dead center and returns again to the dead bottom center. The cumulative damage level evaluation system further includes a cumulative damage level calculation part configured to calculate a cumulative damage level $DF_{F(x)}$ of each evaluation point for each ratio F(x) in the unit period. The availability information acquisition part is configured to obtain the availability information including occurrence frequency $f_{F(x)}$ of each ratio F(x) over the entire evaluation period. Further, the total cumulative damage level evaluation part is configured to evaluate the total cumulative damage level $DF_{total}$ over the entire evaluation period of each evaluation point of the cylinder block based on a following expression.

$$DF_{total} = \Sigma \left( DF_{F(x)} \times f_{F(x)} \right)$$

The cumulative damage level evaluation system described in the above (4) is for a cylinder block of a hydraulic machine which adjusts the displacement by adjusting a ratio F(x) of the number of hydraulic chambers which contribute to output of the hydraulic machine to the total number of hydraulic chambers for each unit period. A unit period is, for instance, a single rotation of the rotation shaft of the hydraulic machine. In the cumulative damage level evaluation system described in the above (4), the cumulative damage level calculation part calculates the cumulative damage level $DF_{F(x)}$ of each evaluation point for each ratio F(x) in the unit period, and the availability information acquisition part obtains occurrence frequency $f_{F(x)}$ of each ratio F(x) in the entire evaluation period. Occurrence frequency $f_{F(x)}$ is, for instance, a value which indicates the number of rotations of the rotation shaft of the hydraulic machine, the number corresponding to a period during which the above ratio F(x) is present in the entire evaluation period, where a unit period corresponds to a single rotation of the rotation shaft of the hydraulic machine. Then, the cumulative damage level calculation system evaluates the total cumulative damage level $DF_{total}$ over the entire evaluation period of each evaluation point of the cylinder block from the above expression, using the cumulative damage level $DF_{F(x)}$ and the occurrence frequency $f_{F(x)}$. In this way, it is possible to evaluate the total cumulative damage level $DF_{total}$ of each evaluation point of the cylinder block of the hydraulic machine appropriately, taking account of the ratio F(x), which is a ratio of the number of the hydraulic chambers that contribute to output of the hydraulic pump to the total number of hydraulic chambers, even if the hydraulic machine adjusts a displacement by adjusting the ratio $F(x)$ every unit period (for instance, every single rotation of the rotation shaft of the hydraulic pump).

(5) In some embodiments, the cumulative damage level evaluation system for a hydraulic machine described in the above (4) further includes a stress information calculation part configured to calculate occurrence frequency of a stress average value and a stress amplitude of each evaluation point of the cylinder block for every ratio $F(x)$ in the unit period.

The cumulative damage level calculation part is configured to calculate the cumulative damage level $DF_{F(x)}$ based on a calculation result of the stress information calculation part and a fatigue-strength chart corresponding to a material of each evaluation point of the cylinder block.

With the above cumulative damage level evaluation system described in the above (5), it is possible to calculate an appropriate cumulative damage level $DF_{F(x)}$ taking account of the material of each evaluation point of the cylinder block.

(6) In some embodiments, in the cumulative damage level evaluation system for a hydraulic machine described in the above (5), the stress information calculation part is configured to calculate the occurrence frequency of the stress average value and the stress amplitude for every ratio $F(x)$ in the unit period at each evaluation point of the cylinder block based on information which indicates a temporal change in stress for every ratio $F(x)$ in the unit period at each evaluation point of the cylinder block.

With the cumulative damage level evaluation system described in the above (6), the occurrence frequency of the stress average value and the stress amplitude for every ratio $F(x)$ in the unit period at each evaluation point of the cylinder block is calculated based on information which indicates a temporal change in stress for every ratio $F(x)$ in the unit period at each evaluation point of the cylinder block, and then the cumulative damage level $DF_{F(x)}$ of the above (5) is calculated based on the occurrence frequency of the stress average value and the stress amplitude. In this way, it is possible to calculate an appropriate cumulative damage level $DF_{F(x)}$ taking account of the material of each evaluation point of the cylinder block and the temporal change in stress at the evaluation point.

(7) In some embodiments, the cumulative damage level evaluation system for a hydraulic machine described in the above (6) further includes: a load acquisition part configured to obtain a temporal change in a plurality of loads applied to the cylinder block for every ratio $F(x)$ in the unit period ; and a stress temporal-change calculation part configured to calculate information which indicates the temporal change in stress for every ratio $F(x)$ in the unit period at each evaluation point of the cylinder block, based on the stress generated on each evaluation point of the cylinder block analyzed for each unit load of the plurality of loads and the temporal change in the plurality of loads obtained for every ratio $F(x)$ by the load acquisition part.

With the cumulative damage level evaluation system described in the above (7), it is possible to calculate an appropriate cumulative damage level $DF_{F(x)}$, taking account of stress generated by a plurality loads applied to the cylinder block. The plurality of loads includes, for instance, a load due to the differential pressure across each high pressure valve, a load due to the differential pressure across each low pressure valve, a piston load, a side load, a load due to a boost pressure of oil to the hydraulic machine, and a load due to a drain pressure (e.g. atmospheric pressure) from the hydraulic machine to an oil tank.

(8) In some embodiments, the cumulative damage level evaluation system for a hydraulic machine described in the above (7) further includes at least one of a measurement unit for measuring the temporal change in the plurality of loads for every ratio $F(x)$ or a storage unit storing the temporal change in the plurality of loads for every ratio $F(x)$.

The load acquisition part is configured to obtain the temporal change in the plurality of loads for every ratio $F(x)$ from the measurement unit or the storage unit.

The temporal change in the plurality of loads for every ratio $F(x)$ may be actually measured by the measurement unit or may be stored in advance in the storage unit, as described in the above (8).

(9) In some embodiments, in the cumulative damage level evaluation system for a hydraulic machine described in the above (7) or (8), the plurality of loads includes at least a load caused by a differential pressure across the high pressure valves and a load caused by a differential pressure across the low pressure valves.

With the cumulative damage level evaluation system described in the above (9), it is possible to evaluate the total cumulative damage level of each evaluation point of the cylinder block over the entire evaluation period taking account of the load caused by a differential pressure across the high pressure valves and a load caused by a differential pressure across the low pressure valves, which are the major loads applied to the cylinder block.

(10) In some embodiments, in the cumulative damage level evaluation system for a hydraulic machine described in any one of the above (1) to (9), the evaluation points of the cylinder block include at least a portion of the high pressure valves, a portion of the low pressure valves, and a portion of the cylinders.

With the cumulative damage level evaluation system described in the above (10), it is possible to evaluate the total cumulative damage level at major portions on the cylinder block to which the loads are applied in accordance with operation of the hydraulic chambers.

(11) In some embodiments, in the cumulative damage level evaluation system for a hydraulic machine described in any one of the above (1) to (10), the evaluation period includes a period from a current time to a next maintenance.

With the cumulative damage level evaluation system described in the above (11), when occurrence frequency of output of the hydraulic machine over a period to the next maintenance is predictable from statistical data of wind condition or the like, for instance, it is possible to evaluate the above total cumulative damage level at each evaluation point of the cylinder block based on the prediction. Further, in accordance with this evaluation result, the control part may determine an operation pattern whereby it is possible to avoid stress concentration in the remaining period before the next maintenance, as described in the above (2).

(12) A renewable energy power generating apparatus according to some embodiments includes: a rotation shaft configured to be driven by renewable energy; a hydraulic pump configured to be driven by the rotation shaft; a hydraulic motor configured to be driven by pressurized oil supplied from the hydraulic pump; a generator coupled to the hydraulic motor; and the cumulative damage level evaluation system according to any one of the above (1) to (11). The cumulative damage level evaluation system is for the hydraulic pump or the hydraulic motor.

With the renewable energy power generating apparatus described in the above (12), it is possible to evaluate the total cumulative damage level over the entire evaluation period at each evaluation point of the cylinder block, appropriately taking account of the operation state over the entire evaluation period of each hydraulic chamber for the hydraulic pump or the hydraulic motor for transmitting rotation energy of the rotation shaft driven by renewable energy to the generator.

(13) In some embodiments, in the renewable energy power generating apparatus described in the above (12), the renewable energy is wind energy.

With the renewable energy power generating apparatus described in the above (13), it is possible to evaluate the total cumulative damage level over the entire evaluation period at each evaluation point of the cylinder block, appropriately taking account of the operation state over the entire evaluation period of each hydraulic chamber for the hydraulic pump or the hydraulic motor for transmitting rotation energy of the rotation shaft to the generator, the rotation shaft being driven by wind energy.

(14) A method of evaluating a cumulative damage level of a hydraulic machine according to at least one embodiment of the present invention is for a hydraulic machine which includes a plurality of pistons and at least one cylinder block, according to claim 13. The at least one cylinder block includes a plurality of cylinders for forming a plurality of hydraulic chambers with the plurality of pistons and guiding reciprocating motion of the respective pistons, and a plurality of high pressure valves and a plurality of low pressure valves for switching a pressure of each of the plurality of hydraulic chambers. The method includes: an acquisition step of obtaining availability information which indicates an availability of each cylinder in an evaluation period; and an evaluation step of evaluating an accumulative damage level in the evaluation period at each of evaluation points of the cylinder block based on the availability information obtained in the acquisition step.

The stress distribution in the cylinder block in the hydraulic machine varies in accordance with the operation state of each of the hydraulic chambers. Thus, the availability over an entire evaluation period of each hydraulic chamber affects the total cumulative damage level at each position in the cylinder block over the entire evaluation period.

In view of this, in the method of evaluating a cumulative damage level described in the above (14), availability information indicating the availability of each hydraulic chamber in the entire evaluation period is obtained, and the total cumulative damage level of each evaluation point of the cylinder block in the entire evaluation period is evaluated based on the availability information. In this way, it is possible to evaluate the total cumulative damage level of each evaluation point of the cylinder block in the entire evaluation period, appropriately taking account of the operation state of each hydraulic chamber in the entire evaluation period.

(15) A method of controlling a hydraulic machine according to at least one embodiment of the present invention is for a hydraulic machine which includes a plurality of pistons, a controller and at least one cylinder block. The at least one cylinder block includes a plurality of cylinders for forming a plurality of hydraulic chambers with the plurality of pistons and guiding reciprocating motion of the respective pistons, and a plurality of high pressure valves and a plurality of low pressure valves for switching a pressure of each of the plurality of hydraulic chambers. The method includes: an acquisition step of obtaining availability information which indicates an availability of each of the hydraulic chambers in an evaluation period; an evaluation step of evaluating a cumulative damage level in the evaluation period of each of evaluation points of the cylinder block based on the availability information obtained in the acquisition step; and a control step of performing, when the cumulative damage level of at least one of the evaluation points of the cylinder block in the evaluation period evaluated in the evaluation step has exceeded a threshold value, a control for avoiding stress concentration to the at least one evaluation point at which the cumulative damage level has exceeded the threshold value.

The stress distribution in a cylinder block of a hydraulic machine varies in accordance with the operation state of each of the hydraulic chambers. Thus, the availability over an entire evaluation period of each hydraulic chamber affects the total cumulative damage level at each position of the cylinder block over the entire evaluation period.

In view of this, in the method of controlling a hydraulic machine described in the above (15), availability information indicating the availability of each hydraulic chamber in an entire evaluation period is obtained, and the total cumulative damage level of each evaluation point of the cylinder block in the entire evaluation period is evaluated based on the availability information. In this way, it is possible to evaluate the total cumulative damage level of each evaluation point of the cylinder block in the entire evaluation period, appropriately taking account of the operation state of each hydraulic chamber in the entire evaluation period. Further, stress concentration in the cylinder block is avoided, so that it is possible to effectively restrict breakage of the cylinder block, which makes it possible to improve the lifetime of the entire cylinder block and to reduce the frequency of maintenance, for instance.

According to at least one embodiment of the present invention, it is possible to provide a cumulative damage level evaluation system for a hydraulic machine which can evaluate a total cumulative damage level of each evaluation point of a cylinder block of an entire evaluation period, appropriately taking account of an operation state of each hydraulic chamber in the entire evaluation period.

BRIEF DESCRIPTION OF DRAWINGS

FIG. 1 is a schematic diagram of an overall configuration of a wind turbine power generating apparatus being a renewable energy power generating apparatus according to one embodiment.
FIG. 2 is a cross-sectional view along an axis of a hydraulic pump according to one embodiment.
FIG. 3 is a partial cross-sectional view, perpendicular to an axis of a hydraulic pump, of a configuration example of a cylinder block and its peripheral area in the hydraulic pump according to one embodiment.
FIG. 4 is a diagram of a configuration example of a cumulative damage level evaluation system according to one embodiment.
FIG. 5 is a diagram illustrating occurrence frequency $f_{F(x)}$ of ratios F(x) in the entire evaluation period used in one embodiment.
FIG. 6 is a diagram of a fatigue-strength chart used in one embodiment.
FIGs. 7A and 7B are each a diagram of an example of a temporal change over a unit period of a piston load and a side load, where F(x) = 0.5 and 1.0, respectively.
FIG. 8 is a diagram of an exemplary evaluation flow of a total cumulative damage level $DF_{total}$ of a cumulative damage level evaluation system.
FIG. 9 is a schematic perspective view of the cylinder block body illustrated in FIGs. 2 and 3.
FIG. 10 is a diagram illustrating the respective total cumulative damage levels $DF_{total}$ of respective evaluation points on the cylinder block body over an entire evaluation period as a gray-scale image.
FIG. 11 is a diagram of an exemplary control flow of a hydraulic pump based on the total cumulative damage level $DF_{total}$.

DETAILED DESCRIPTION

Embodiments of the present invention will now be described with reference to the accompanying drawings. It is intended, however, dimensions, materials, shapes, relative positions and the like of components described in the embodiments or the drawings shall be interpreted as illustrative only and not limitative of the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

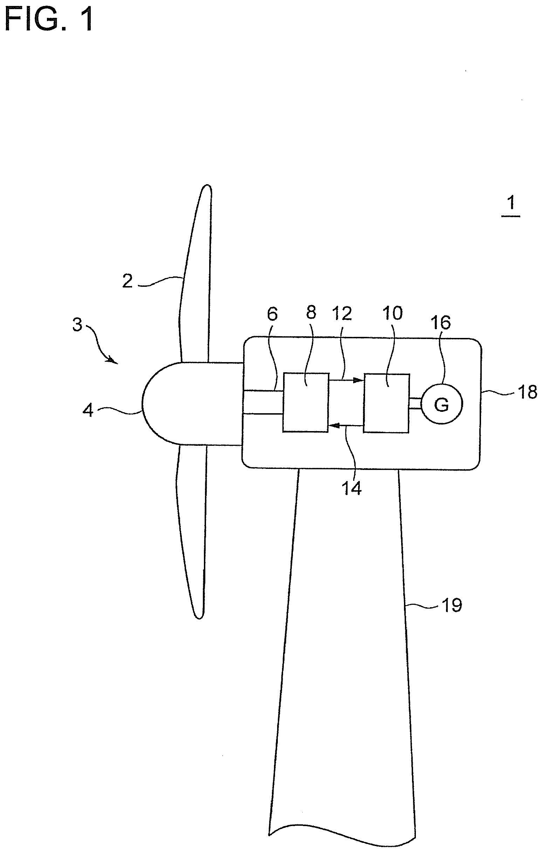

FIG. 1 is a schematic diagram of a wind turbine power generating apparatus being a renewable energy power generating apparatus according to one embodiment.

As illustrated in the drawing, the wind turbine power generating apparatus 1 includes a rotor 3 including at least one blade 2 and a hub 4.

In one embodiment, a hydraulic pump 8 is coupled to the rotor 3 via a rotation shaft 6. A hydraulic motor 10 is connected to the hydraulic pump 8 via a high pressure oil line 12 and a low pressure oil line 14. Specifically, the outlet of the hydraulic pump 8 is connected to the inlet of the hydraulic motor 10 via the high pressure oil line 12, and the inlet of the hydraulic pump 8 is connected to the outlet of the hydraulic motor 10 via the low pressure oil line 14. The hydraulic pump 8 increases the pressure of working oil by being driven by the rotation shaft 6, thereby generating high pressure working oil (pressurized oil). The pressurized oil generated in the hydraulic pump 8 is supplied to the hydraulic motor 10 via the high pressure oil line 12, and then the hydraulic motor 10 is driven by the pressurized oil. The low pressure working oil having performed work in the hydraulic motor 10 is returned again to the hydraulic pump 8 via the low pressure oil line 14 disposed between the outlet of the hydraulic motor 10 and the inlet of the hydraulic pump 8.

A generator 16 is coupled to the hydraulic motor 10. In one embodiment, the generator 16 is a synchronous generator connected to a utility grid and driven by the hydraulic motor 10. The generator 16 is not limited to a synchronous generator.

At least a part of the rotation shaft 6 may be covered by a nacelle 18 disposed on a tower 19. In one embodiment, the hydraulic pump 8, the hydraulic motor 10, and the generator 16 are disposed inside the nacelle 18.

In some embodiments, the hydraulic pump 8 is a radial-piston hydraulic pump described below.

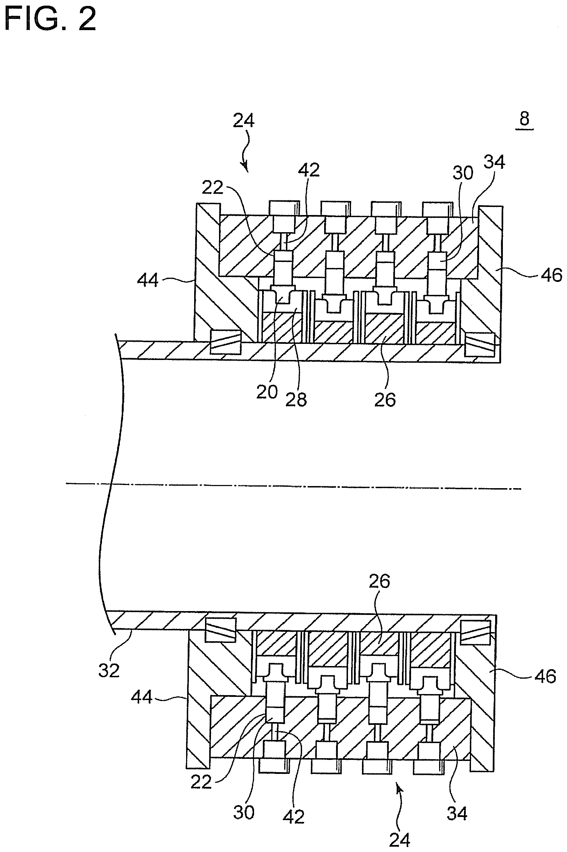

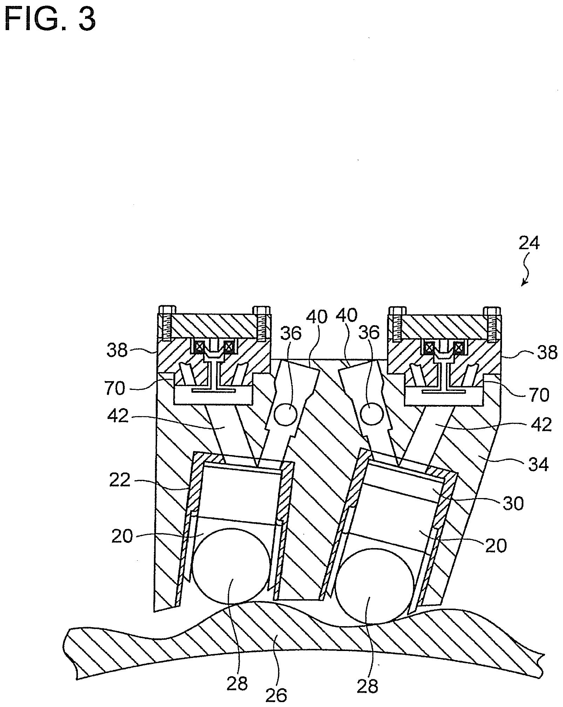

FIG. 2 is a cross-sectional view of a hydraulic pump according to one embodiment. FIG. 3 is a partial cross-sectional view of a configuration example of a cylinder block and its peripheral area in a hydraulic pump according to one embodiment. Now, with reference to FIGs. 2 and 3, the configuration of the hydraulic pump 8 will be described.

In the exemplary embodiment illustrated in the drawings, the hydraulic pump 8 includes a plurality of pistons 20 arranged in the circumferential direction and in the axial direction of the hydraulic pump 8, and a cylinder block 24 including a plurality of cylinders 22 for guiding reciprocating motion of the respective pistons 20.

The plurality of pistons 20 is arranged in a radial fashion outside a ring cam 26 in the radial direction. A roller 28 that contacts a cam surface of the ring cam 26 is attached to an end of each piston 20. The pistons 20 are configured to be reciprocable along the radial direction of the hydraulic pump 8 while being guided by the cylinders 22. When each piston 20 reciprocates in corresponding one of the cylinders 22, the volume of a hydraulic chamber 30 formed by the piston 20 and the cylinder 22 cyclically changes. The mode of motion is converted between the rotational motion of the hydraulic pump and the reciprocating motion of the pistons 20 which is accompanied by the cyclic change of volume of the hydraulic chambers 30. That is, rotational motion of the ring cam 26 rotating with the rotation shaft 32 of the hydraulic pump 8 is converted into the reciprocating motion of the pistons 20, so that the cyclic change in volume of the hydraulic chambers 30 occurs and high pressure working oil (pressurized oil) is produced in the hydraulic chambers 30.

The ring cam 26 is fixed to the outer circumference of a pump shaft 32 which rotates with the rotation shaft 6. Further, the ring cam 26 forms a cam surface which has a continuous wavy shape along the circumferential direction of the pump shaft 32. The ring cam 26 is disposed in an annular shape so as to surround the entire periphery of the pump shaft 32. Further, a plurality of ring cams 26 may be arranged in the axial direction of the pump shaft 32 (hereinafter, referred to as only "axial direction") in rows. Here, the ring cam 26 is not limited to one having a wave-shaped cam surface, but may include a cam surface of an eccentric cam having a single cam surface, in which the center of the ring cam 26 is offset from the center of the shaft.

A plurality of cylinder blocks 24 is disposed radially outside the ring cam 26 along the circumferential direction of the pump shaft 32. Each cylinder block 24 includes a cylinder block body 34, a plurality of high pressure valves 36 and a plurality of low pressure valves 38. The cylinder block body 34 includes a plurality of cylinders 22, a plurality of high pressure oil flow channels 40 and a plurality of low pressure oil flow channels 42. The high pressure oil flow channels 40 and the low pressure oil flow channels 42 are configured to communicate with the hydraulic chambers 30 in the cylinders 22. The high pressure valves 36 and the low pressure valves 38 are respectively disposed in the high pressure oil flow channels 40 and the low pressure oil flow channels 42, so that the high pressure oil flow channels 40 communicate with the high pressure oil line 12 (see FIG. 1) when the high pressure valves 36 open, and the low pressure oil flow channels 42 communicate with the low pressure oil line 14 when the low pressure valves 38 open. As described above, the high pressure valves 36 and the low pressure valves 38 are configured to be capable of switching a pressure of the hydraulic chambers 30.

In some embodiments, for a single cylinder block body 34, a plurality of sets may be arranged in the axial direction and in the circumferential direction of the hydraulic pump 8, each set including a cylinder 22, a high pressure oil flow channel 40 and a low pressure oil flow channel 42. In the exemplary embodiment illustrated in FIGs. 2 and 3, eight sets each including a cylinder 22, a high pressure oil flow channel 40 and a low pressure oil flow channel 42 are provided for a single cylinder block body 34, four in the axial direction and two in the circumferential direction.

The first end plate 44 and the second end plate 46 are disposed on the opposite ends of the cylinder block 24 with respect to the axial direction of the hydraulic pump 8. The first end plate 44 is disposed so as to close an end of the cylinder block 24 which is adjacent to the hub 4 (see FIG. 1). The second end plate 46 is disposed so as to close the other end of the cylinder block 24 which is remote from the hub 4. The first end plate 44 and the second end plate 46 are arranged so as to face each other across the cylinder block 24, and fixed to each other with tie bolts (not illustrated) that penetrate through the cylinder block 24. Further, each cylinder block 24 may be fixed to the first end plate 44 and the second end plate 46 with radial bolts (not illustrated) that are inserted in the radial direction of the hydraulic pump 8.

Next, a cumulative damage level evaluation system for evaluating the cumulative damage level of the cylinder block 24 for the hydraulic pump 8 described with reference to FIGs. 1 to 3 will be described below.

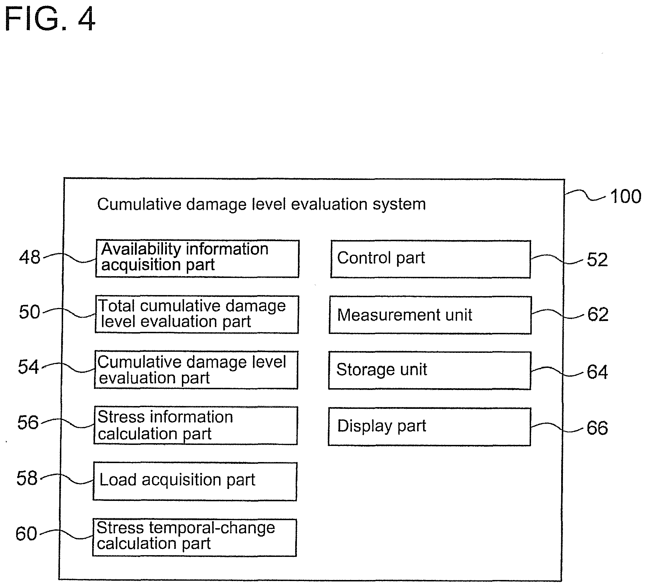

FIG. 4 is a diagram of a configuration example of a cumulative damage level evaluation system according to one embodiment.

The cumulative damage level evaluation system 100 illustrated in FIG. 4 includes an availability information acquisition part 48 and a total cumulative damage level evaluation part 50. The operation-ration information acquisition part 48 is configured to obtain availability information which indicates an availability of each hydraulic chamber 30 in the entire evaluation period (see FIGs. 2 and 3). The total cumulative damage level evaluation part 50 is configured to evaluate the total cumulative damage level of each evaluation point of the cylinder block 24 (see FIGs. 2 and 3) over the entire evaluation period based on the availability information obtained by the availability information acquisition part 48.

The stress distribution in the cylinder block 24 in the hydraulic pump 8 varies in accordance with the operation state of each of the hydraulic chambers 30. Thus, the availability of each hydraulic chamber 30 over the entire evaluation period affects the total cumulative damage level over the entire evaluation period at each position in the cylinder block 24.

In view of this, in the cumulative damage level evaluation system 100, the availability information indicating the availability of each hydraulic chamber 30 in the entire evaluation period is obtained by the availability information acquisition part 48, and the total cumulative damage level over the entire evaluation period of each evaluation point of the cylinder block 24 is evaluated by the total cumulative damage level evaluation part based on the availability information. In this way, it is possible to evaluate the total cumulative damage level of each evaluation point of the cylinder block 24 in the entire evaluation period, appropriately taking account of the operation state of each hydraulic chamber 30 in the entire evaluation period.

An evaluation period here may be a period of time corresponding to the design product lifetime of the cylinder block 24, a cumulative operation period of the cylinder block 24 until the evaluation time (current time), or a sum of the cumulative operation period and a period from the current time to the next maintenance.

Further, the availability information acquisition part 48 may obtain an availability actually measured by a measurement unit 62, or may obtain the availability from a storage unit storing an availability based on prediction when occurrence frequency of output of the hydraulic pump 8 is predictable from statistical data of wind condition or the like.

The cumulative damage level evaluation system 100 further includes a control part 52 configured to control at least one of the plurality of high pressure valves 36 or the plurality of low pressure valves 38 in accordance with the operation pattern of the hydraulic chambers 30 in the cylinder block 24 (see FIGs. 2 and 3).

Here, the control part 52 is configured to control a displacement of the hydraulic pump 8 by adjusting $F(x)$ indicating a ratio of "n-x" to "x" (i.e., $F(x) = (n - x) / n$) every unit period (for instance, every single rotation of the rotation shaft of the hydraulic pump 8). In the expression, "n" is the total number of the hydraulic chambers 30 and "x" is the number of hydraulic chambers 30 that maintain a state in which the high pressure valve 36 is closed and the low pressure valve 38 is open during a cycle in which the piston 20 moves from the bottom dead center to the top dead center and returns again to the bottom dead center.

Further, the control part 52 is configured to determine, when the total cumulative damage level over the entire evaluation period of at least one evaluation point of the cylinder block 24 is greater than a threshold value, an operation pattern whereby it is possible to avoid stress concentration to the evaluation point at which the cumulative damage level is greater than the threshold value.

Avoiding stress concentration to a portion where fatigue has been already accumulated in the cylinder block 24 as described above makes it possible to restrict breakage of the cylinder block 24 effectively, and to improve the lifetime of the entire cylinder block 24 and to reduce the frequency of maintenance, for instance.

The control part 52 is configured to generate a notification signal for warning when an increasing speed of the total cumulative damage level over the entire evaluation period of at least one evaluation point of the cylinder block 24 is greater than a threshold value.

When the increasing speed of the total cumulative damage level of at least one evaluation point of the cylinder block 24 is greater than a threshold value, it is estimated that an abnormal event which may generate unexpected stress distribution has occurred in the hydraulic pump 8. Thus, with the control part 52 generating a notification signal for warning in such a case, it is possible to carry out a suitable measure such as shutdown and maintenance of the hydraulic pump 8 in response to the warning.

The cumulative damage level evaluation system 100 further includes a cumulative damage level calculation part 54 for calculating a cumulative damage level $DF_{F(X)}$ of each evaluation point for every ratio $F(x)$ in a unit period (for instance, every single rotation of the rotation shaft of the hydraulic pump 8).

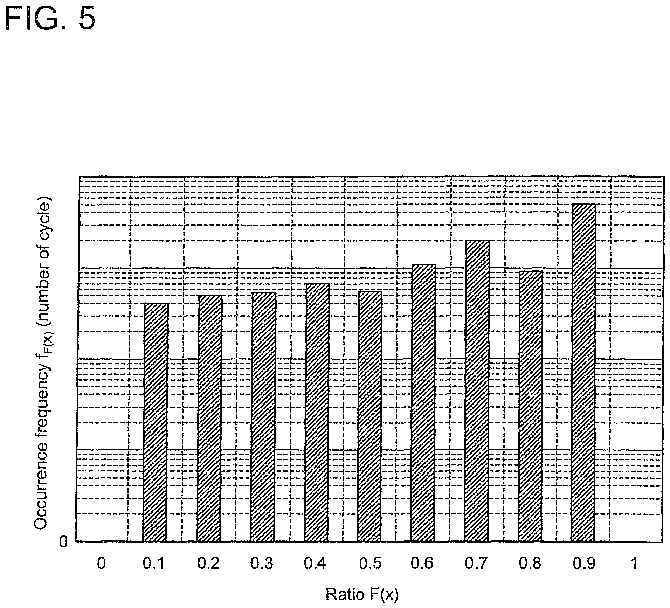

In the embodiment illustrated in FIG. 4, the availability information acquisition part 48 is configured to obtain availability information including occurrence frequency $f_{F(x)}$ (see FIG. 5) of each ratio $F(x)$ in an entire evaluation period. FIG. 5 is a diagram, if a unit period is a period (single cycle) corresponding to a single rotation of the rotation shaft of the hydraulic pump 8, illustrating the number of rotations of the rotation shaft of the hydraulic pump 8 corresponding to a period in which each ratio $F_{(x)}$ above is present in the entire evaluation period. The total cumulative damage level evaluation part 50 is configured to evaluate the total cumulative damage level $DF_{total}$ of each evaluation point of the cylinder block 24 over the entire evaluation period based on the following expression (equation 1).

$$DF_{total} = \Sigma \left( DF_{F(x)} \times f_{F(x)} \right) \quad \text{(Equation 1)}$$

As described above, the total cumulative damage level evaluation part 50 is configured to calculate a total cumulative damage level $D_{Ftotal}$, which is a sum from an entire range of $0 \leq F(x) \leq 1$ of products of the cumulative damage level $DF_{F(x)}$ of each evaluation point for each ratio $F(x)$ in a unit period and occurrence frequency $f_{F(x)}$ of each ratio $F(x)$ in an entire evaluation period.

In this way, it is possible to evaluate the total cumulative damage level $DF_{total}$ of each evaluation point of the cylinder block 24 appropriately, taking account of the above ratio $F(x)$, even in a case where the hydraulic pump 8 is configured to adjust a displacement by adjusting a ratio $F(x)$ of the number of the hydraulic chambers that contributes to output of the hydraulic pump 8 to the total number "n" of hydraulic chambers every unit period (for instance, every single rotation of the rotation shaft of the hydraulic pump 8).

The cumulative damage level evaluation system 100 further includes a stress-information calculation part 56 configured to calculate occurrence frequency of a stress average value and a stress amplitude of each evaluation point of the cylinder block 24 for every ratio $F(x)$ in a unit period by the rainflow process, based on information indicating a temporal change in stress for every ratio $F(x)$ in a unit period of each evaluation point of the cylinder block 24.

The cumulative damage level calculation part 54 is configured to calculate a cumulative damage level $DF_{F(X)}$ based on the calculation result of the stress-information calculation part 56 and a fatigue-strength chart corresponding to a material of each evaluation point of the cylinder block 24. In one embodiment, the cumulative damage level calculation part 54 may convert the stress average value and the stress amplitude calculated by the stress-information calculation part 56 into an equivalent stress amplitude (a stress amplitude that gives an equivalent damage level while an average stress is zero) using a Goodman chart, for instance. In this case, the cumulative damage level calculation part 54 calculates the cumulative damage level $DF_{F(X)}$ from the following expression (equation 2) using a damage repetition number $Nf_i$ that is given from the fatigue-strength chart and the oc-

currence frequency $N_i$ of the equivalent stress amplitude $\sigma_i$.

$$DF_{F(x)} = \Sigma \left( Ni/Nf_i \right) \quad \text{(Equation 2)}$$

(Equation 2)

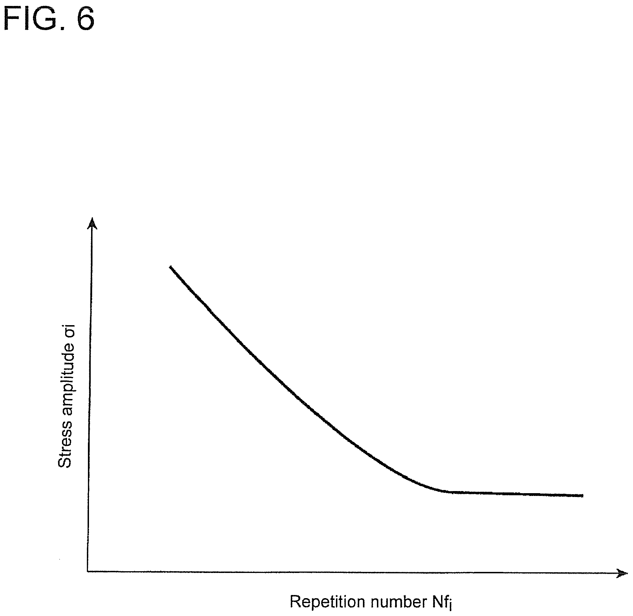

As a result, it is possible to calculate an appropriate cumulative damage level $DF_{F(X)}$ taking account of a material of each evaluation position of the cylinder block 24 and the temporal change in stress at the evaluation point. Here, the fatigue-strength chart indicates a relationship between damage and the number of repetition of the stress amplitude $\sigma_i$, as illustrated in FIG. 6. For instance, the fatigue-strength chart may be stored in the storage unit 64 and read out when needed.

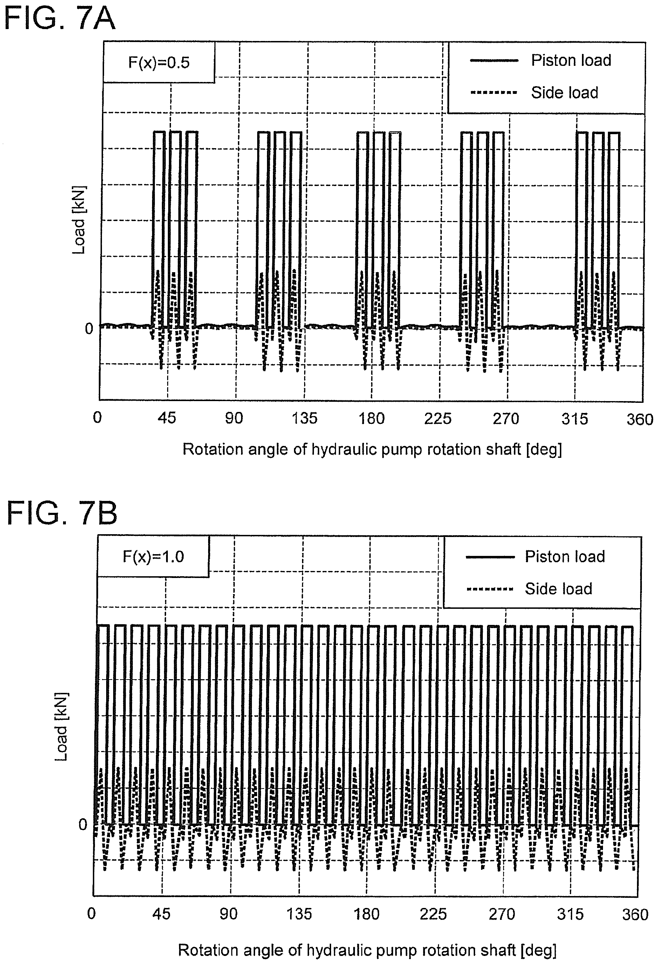

The cumulative damage level evaluation system 100 further includes a load acquisition part 58 configured to obtain a temporal change of a plurality of loads applied to the cylinder block 24 for every ratio $F(x)$ in the unit period. The plurality of loads includes, for instance, load modes such as a load due to the differential pressure across each high pressure valve 36, a load due to the differential pressure across each low pressure valve 38, a piston load, a side load, a load due to a boost pressure of oil to the hydraulic pump 8, and a load due to a drain pressure (e.g. atmospheric pressure) from the hydraulic pump 8 to an oil tank (not illustrated). FIGs. 7A and 7B are each a diagram of an example of a temporal change over a unit period of a piston load and a side load, where $F(x) = 0.5$ and 1.0, respectively. Here, a piston load and a side load respectively refer to forces in the radial direction and in the circumferential direction of the hydraulic pump 8 that the cylinders 22 receive from the pistons 20 in accordance with reciprocating motion of the pistons 20.

Further, the cumulative damage level evaluation system 100 further includes a stress temporal-change calculation part 60 configured to calculate information that indicates a temporal change in stress for every ratio $F(x)$ in a unit period at each evaluation point of the cylinder block 24 based on: stress generated on each evaluation point of the cylinder block 24 analyzed by the finite element method (FEM) on each unit load of a plurality of loads; and a temporal change in the plurality of loads obtained by the load acquisition part 58 for each ratio $F(x)$.

In this way, it is possible to calculate an appropriate cumulative damage level $DF_{F(X)}$ taking account of stress generated by a plurality of loads that is applied to the cylinder block 24.

The cumulative damage level evaluation system 100 further includes at least one of a measurement unit 62 for measuring a temporal change in a plurality of loads for every ratio $F(x)$ or a storage unit 64 that stores the temporal change in a plurality of loads for every ratio $F(x)$. The load acquisition part 58 is configured to obtain a temporal change in a plurality of loads for every ratio F(x) from the measurement unit 62 or the storage unit 64.

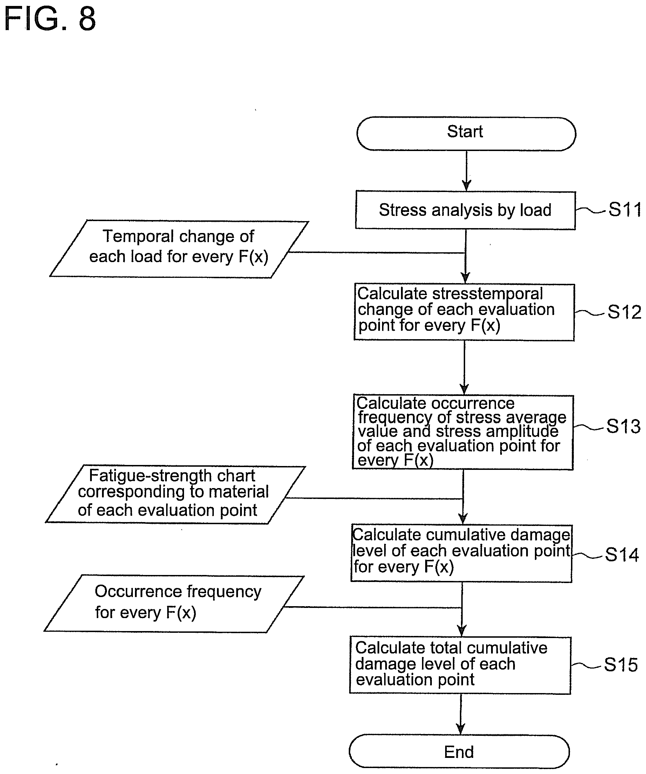

Next, with reference to FIG. 8, an example of an evaluation flow of the total cumulative damage level $DF_{total}$ by the cumulative damage level evaluation system 100 will be described.

First, in S11, stress generated on each evaluation point of the cylinder block 24 due to each unit load of the above plurality of loads is analyzed by the finite element method (FEM).

Next, in S12, the stress temporal-change calculation part 60 calculates the temporal change in stress for every ratio F(x) in a unit period at each evaluation point of the cylinder block 24, based on the temporal change (see FIG. 7) in the plurality of loads obtained by the load acquisition part 58 for every ratio F(x) in a unit period and an analysis result of S11.

Next, in S13, a rainflow process is performed on the temporal change in stress for every ratio F(x) in a unit period at each evaluation point of the cylinder block 24, and the stress information calculation part 56 calculates occurrence frequency of a stress average value and a stress amplitude of each evaluation point of the cylinder block 24 for every ratio F(x) in a unit period.

Further, in S14, the cumulative damage level calculation part 54 calculates a cumulative damage level $DF_{F(x)}$ of each evaluation point for every ratio F(x) in a unit period based on the calculation result of the stress information calculation part 56 and a fatigue-strength chart (see FIG. 6) corresponding to a material of each evaluation point of the cylinder block 24. In S14, the cumulative damage level $DF_{F(x)}$ may be calculated after the stress average value and the stress amplitude, which are the calculation results of the stress information calculation part 56, have been converted into an equivalent stress amplitude using a Goodman chart or the like, as described above.

Subsequently, in S15, the total cumulative damage level evaluation part 50 evaluates the total cumulative damage level $DF_{total}$ over the entire evaluation period of each evaluation point of the cylinder block 24 from the above expression (equation 1), based on occurrence frequency $f_{F(x)}$ (see FIG. 5) of each ratio F(x) in the entire evaluation period obtained by the availability information acquisition part 48 and the above cumulative damage level $DF_{F(x)}$ calculated by the cumulative damage level calculation part 54.

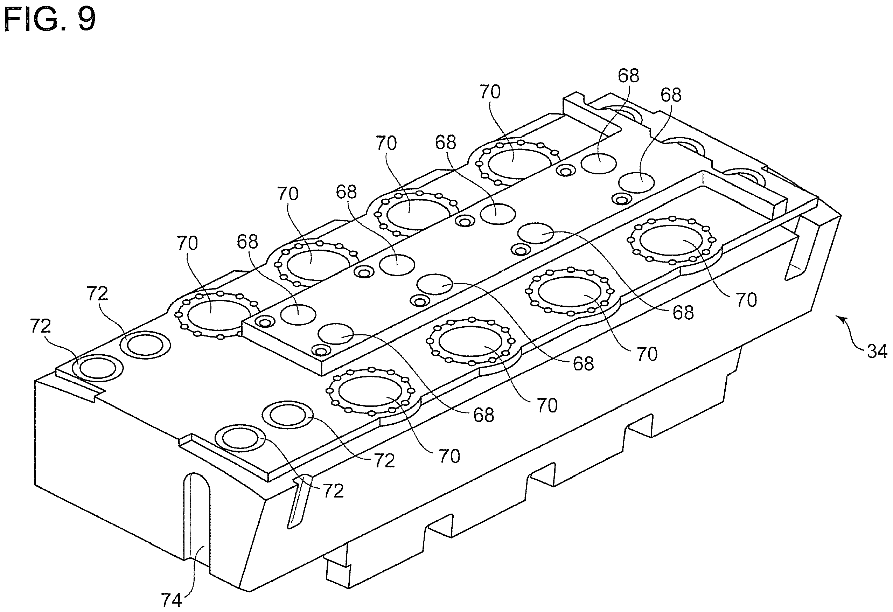

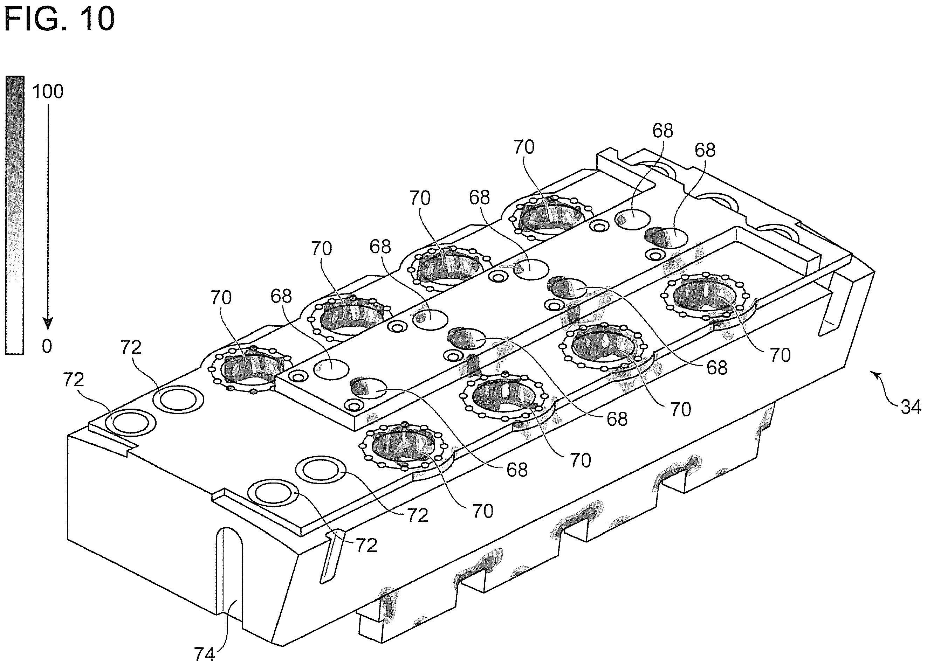

FIG. 9 is a schematic perspective view of the cylinder block body 34 illustrated in FIGs. 2 and 3. FIG. 10 is a diagram illustrating the total cumulative damage levels $DF_{total}$ of each evaluation point of the cylinder block body 34 over the entire evaluation period as a gray-scale image.

In some embodiments, as illustrated in FIG. 10, the total cumulative damage level $DF_{total}$ over the entire evaluation period of each evaluation point may be visualized by indicating the same on a display part 66 (see FIG. 4) as a gray-scale image or a color-coded image.

With the total cumulative damage level $DF_{total}$ visualized by a gray-scale image or a color-coded image, it is possible to easily determine a spot that needs to be intensively checked during maintenance for a crack or breakage, and to improve efficiency of maintenance.

Here, in the example illustrated in FIG. 10, it can be seen that the total cumulative damage levels $DF_{total}$ are high at high-pressure valve attachment parts 68 and low-pressure valve attachment parts 70 of the cylinder block body 34. This is due to loads caused by differential pressures across the high-pressure valves 36 and across the low pressure valves 38. Here, while the evaluation result of the total cumulative damage level $DF_{total}$ for the cylinder block body 34 is illustrated in FIG. 10, a target of evaluation is not limited to the cylinder block body 34, and the entire cylinder block 24 illustrated in FIGs. 2 and 3 may be evaluated. A target of evaluation (evaluation point) may include a portion of a high pressure valve 36 or a portion of a low pressure valve 38 illustrated in FIGs. 2 and 3, a portion of a cylinder 22, or a bolt attachment part 72 or a groove 74 illustrated in FIG. 10, for instance.

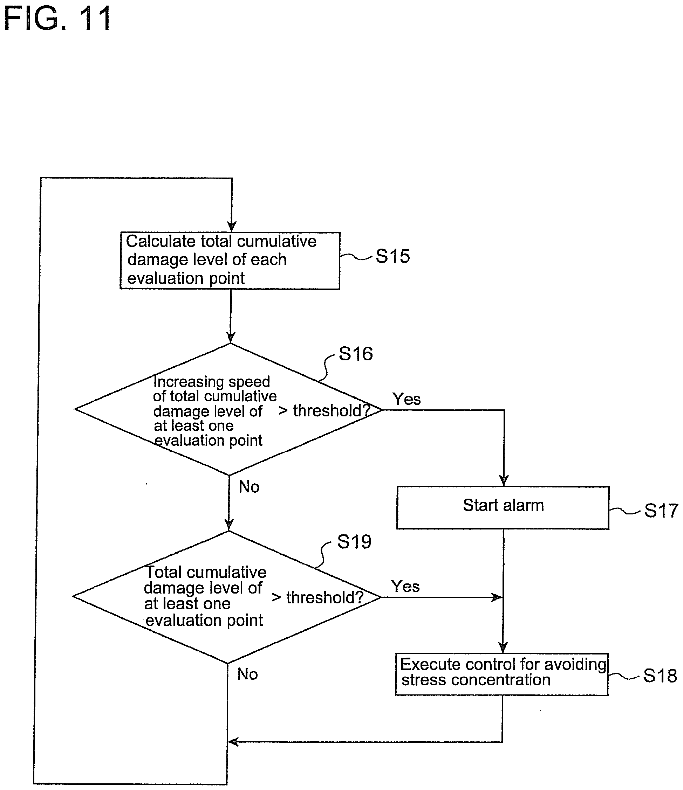

Next, with reference to FIG. 11, an example of the control flow of the hydraulic pump 8 based on the above total cumulative damage level $DF_{total}$ will be described.

In S16, from among the respective cumulative damage levels $DF_{total}$ of the evaluation points calculated in S15, the control part 52 determines whether the increasing speed of the total cumulative damage level $DF_{total}$ of at least one evaluation point is greater than a threshold value. In S16, if it is determined that the increasing speed is greater than the threshold value, the control part 52 generates a notification signal for warning and starts an alarm in response to the notification signal in S17. In one embodiment, after the alarm is started, the control part 52 may perform a control for avoiding stress concentration to the at least one evaluation point at which the increasing speed is greater than the threshold value. In S16, if it is determined that the increasing speed is not greater than the threshold value, the control part 52 determines whether the total cumulative damage level $DF_{total}$ of the at least one evaluation point over the entire evaluation period is greater than the threshold value in S19.

If it is determined that the total cumulative damage level $DF_{total}$ of at least one evaluation point is greater than a threshold value in S19, the control part 52 performs a control for avoiding stress concentration to the at least one evaluation point at which the total cumulative damage level $DF_{total}$ is greater than the threshold value in S18. In S19, if it is determined that there is no evaluation point at which the total cumulative damage level $DF_{total}$ is greater than the threshold value, the process returns to S15 and the above flow is repeated.

As described above, stress concentration to a portion on which fatigue has been already accumulated in the cylinder block 24 is avoided, which makes it possible to effectively restrict breakage of the cylinder block 24 and to increase the lifetime of the entire cylinder block 24 and reduce the frequency of maintenance, for instance. Further, since the control part 52 generates a notification signal for warning, it is possible to perform an appropriate measure such as shutdown and maintenance of the hydraulic pump 8 in accordance with the warning.

The above cumulative damage level evaluation system 100 may be included in the wind turbine power generating apparatus 1, or may be provided as a system separate from the wind turbine power generating apparatus 1. Further, only a part (for instance, the control part 52, the measurement unit 62, and the storage unit 64 in FIG. 4) of the cumulative damage level evaluation system 100 may be included in the wind turbine power generating apparatus 1, and other configuration of the cumulative damage level evaluation system 100 may be provided separately from the wind turbine power generating apparatus 1.

Embodiments of the present invention were described in detail above, but the present invention is not limited thereto, and variations and combination of the above embodiments may be implemented.

**Claims**

1. A cumulative damage level evaluation system (100) for a hydraulic machine (8, 10) which includes a plurality of pistons (20) and at least one cylinder block (24) including a plurality of cylinders (22) for forming a plurality of hydraulic chambers (30) with the plurality of pistons (20) and guiding reciprocating motion of the respective pistons (20) and a plurality of high pressure valves (36) and a plurality of low pressure valves (38) for switching a pressure of each of the plurality of hydraulic chambers (30), the cumulative damage level evaluation system (100) comprising:

   an availability information acquisition part (48) configured to obtain availability information which indicates an availability of each of the hydraulic chambers (30) in an evaluation period;
   a total cumulative damage level evaluation part (50) configured to evaluate a total cumulative damage level over the entire evaluation period of each of evaluation points of the cylinder block (24) based on the availability information obtained by the availability information acquisition part (48), and
   a control part (52) configured to control at least one of the plurality of high pressure valves (36) or the plurality of low pressure valves (38) in accordance with an operation pattern of the plurality of hydraulic chambers (30) in the cylinder block (24),
   wherein, when the total cumulative damage level over the entire evaluation period of at least one of the evaluation points of the cylinder block (24) is greater than a threshold value, the control part (52) is configured to determine the operation pattern in which stress concentration to the at least one evaluation point at which the cumulative damage level is greater than the threshold value is avoidable.

2. The cumulative damage level evaluation system (100) according to claim 1,
   wherein the control part (52) is configured to generate a notification signal for warning when an increasing speed of the total cumulative damage level over the entire evaluation period of at least one of the evaluation points of the cylinder block (24) is greater than a threshold value.

3. The cumulative damage level evaluation system (100) according to claim 1 or 2,
   wherein the control part (52) is configured to control a displacement of the hydraulic machine by adjusting F(x) which indicates a ratio of "n-x" to "n" in each unit period, where "n" is the total number of the hydraulic chambers (30) and "x" is the number of hydraulic chambers (30) which maintain a state in which the corresponding high pressure valve (36) is closed and the corresponding low pressure valve (38) is open during a cycle in which the corresponding piston (20) moves from a dead bottom center to a top dead center and returns again to the dead bottom center, and
   wherein the cumulative damage level evaluation system (100) further comprises a cumulative damage level calculation part (54) configured to calculate a cumulative damage level $DF_{F(x)}$ of each evaluation point for each ratio F(x) in the unit period,
   wherein the availability information acquisition part (48) is configured to obtain the availability information including occurrence frequency $f_{F(x)}$ of each ratio F(x) over the entire evaluation period, and
   wherein the total cumulative damage level evaluation part (50) is configured to evaluate the total cumulative damage level $DF_{total}$ over the entire evaluation period of each evaluation point of the cylinder block (24) based on a following expression.

$$DF_{total} = \Sigma \left( DF_{F(x)} \times f_{F(x)} \right)$$

4. The cumulative damage level evaluation system (100) according to claim 3, further comprising a stress information calculation part (56) configured to calculate occurrence frequency of a stress average value and a stress amplitude of each evaluation point of the cylinder block (24) for every ratio F(x) in the unit period ,
   wherein the cumulative damage level calculation part (54) is configured to calculate the cumulative damage level $DF_{F(x)}$ based on a calculation result of the stress information calculation part (56) and a fatigue-strength chart corresponding to a material of each evaluation point of the cylinder block (24).

5. The cumulative damage level evaluation system (100) according to claim 4,
   wherein the stress information calculation part (56) is configured to calculate the occurrence frequency of the stress average value and the stress amplitude for every ratio F(x) in the unit period at each evaluation point of the cylinder block (24) based on information which indicates a temporal change in stress for every ratio F(x) in the unit period at each evaluation point of the cylinder block (24).

6. The cumulative damage level evaluation system (100) according to claim 5, further comprising:

   a load acquisition part (58) configured to obtain a temporal change in a plurality of loads applied to the cylinder block (24) for every ratio F(x) in the unit period ; and
   a stress temporal change calculation part (60) configured to calculate information which indicates the temporal change in stress for every ratio F(x) in the unit period at each evaluation point of the cylinder block (24), based on the stress generated on each evaluation point of the cylinder block (24) analyzed for each unit load of the plurality of loads and the temporal change in the plurality of loads obtained for every ratio F(x) by the load acquisition part.

7. The cumulative damage level evaluation system (100) according to claim 6, further comprising at least one of a measurement unit (62) for measuring the temporal change in the plurality of loads for every ratio F(x) or a storage unit (64) storing the temporal change in the plurality of loads for every ratio F(x), wherein the load acquisition part (58) is configured to obtain the temporal change in the plurality of loads for every ratio F(x) from the measurement unit (62) or the storage unit (64).

8. The cumulative damage level evaluation system (100) according to claim 6 or 7,
   wherein the plurality of loads includes at least a load caused by a differential pressure across the high pressure valves (36) and a load caused by a differential pressure across the low pressure valves (38).

9. The cumulative damage level evaluation system (100) according to any one of claims 1 to 8,
   wherein the evaluation points of the cylinder block (24) include at least a portion of the high pressure valves (36), a portion of the low pressure valves (38), and a portion of the cylinders (22).

10. The cumulative damage level evaluation system (100) according to any one of claims 1 to 9,
    wherein the evaluation period includes a period from a current time to a next maintenance.

11. A renewable energy power generating apparatus (1) which generates electric power from renewable energy, comprising:

    a rotation shaft (6) configured to be driven by renewable energy;
    a hydraulic pump (8) configured to be driven by the rotation shaft (6);
    a hydraulic motor (10) configured to be driven by pressurized oil supplied from the hydraulic pump (8);
    a generator (16) coupled to the hydraulic motor (10); and
    the cumulative damage level evaluation system (100) according to claim 1 to 10,
    wherein the cumulative damage level evaluation system (100) is for the hydraulic pump (8) or the hydraulic motor (10).

12. The renewable energy power generating apparatus (1) according to claim 11, wherein the renewable energy is wind energy.

13. A method of evaluating a cumulative damage level of a hydraulic machine (8, 10) which includes a plurality of pistons (20) and at least one cylinder block (24) including a plurality of cylinders (22) for forming a plurality of hydraulic chambers (30) with the plurality of pistons (20) and guiding reciprocating motion of the respective pistons (20) and a plurality of high pressure valves (36) and a plurality of low pressure valves (38) for switching a pressure of each of the plurality of hydraulic chambers (30), the method comprising:

    an acquisition step of obtaining availability information which indicates an availability of each cylinder (22) in an evaluation period;
    an evaluation step of evaluating an accumulative damage level in the evaluation period at each of evaluation points of the cylinder block (24) based on the availability information obtained in the acquisition step,
    wherein the hydraulic machine (8, 10) controls a displacement of the hydraulic machine by adjusting F(x) which indicates a ratio of "n-x" to "n" in each unit period, where "n" is the total number of the hydraulic chambers (30) and "x" is the number of hydraulic chambers (30) which maintain a state in which the corresponding high pressure valve (36) is closed and the corresponding low pressure valve (38) is open during a cycle in which the corresponding piston (20) moves from a dead bottom center to a top dead center and returns again to the dead bottom center, and

wherein, in the evaluation step, the cumulative damage level evaluation system (100) further comprises a cumulative damage level calculation part (54) which calculates a cumulative damage level $DF_{F(x)}$ of each evaluation point for each ratio F(x) in the unit period,

wherein the availability information acquisition part (48) obtains the availability information including occurrence frequency $f_{F(x)}$ of each ratio F(x) over the entire evaluation period, and

wherein the total cumulative damage level evaluation part (50) evaluates the total cumulative damage level $DF_{total}$ over the entire evaluation period of each evaluation point of the cylinder block (24) based on a following expression

$$DF_{total} = \Sigma \left( DF_{F(x)} \times f_{F(x)} \right)$$

14. A method of controlling a hydraulic machine (8, 10) which includes a plurality of pistons (20), a controller and at least one cylinder block (24) including a plurality of cylinders (22) for forming a plurality of hydraulic chambers (30) with the plurality of pistons (20) and guiding reciprocating motion of the respective pistons (20) and a plurality of high pressure valves (36) and a plurality of low pressure valves (38) for switching a pressure of each of the plurality of hydraulic chambers (30), the method comprising:

an evaluation step of evaluating a cumulative damage level in the evaluation period of each of evaluation points of the cylinder block (24) , which is performed by the method according to claim 13; and

a control step of performing, when the cumulative damage level of at least one of the evaluation points of the cylinder block (24) in the evaluation period evaluated in the evaluation step has exceeded a threshold value, a control for avoiding stress concentration to the at least one evaluation point at which the cumulative damage level has exceeded the threshold value.

**Patentansprüche**

1. System zur Bewertung eines kumulativen Beeinträchtigungsgrads (100) für eine hydraulische Maschine (8, 10), die mehrere Kolben (20) und mindestens einen Zylinderblock (24) mit mehreren Zylindern (22) zur Ausbildung mehrerer hydraulischer Kammern (30) mit den mehreren Kolben (20) und zur Führung einer Hin- und Herbewegung der jeweiligen Kolben (20) und mehrere Hochdruckventile (36) und mehrere Niederdruckventile (38) zum Schalten eines Drucks von jeder der mehreren hydraulischen Kammern (30) beinhaltet, das System zur Bewertung eines kumulativen Beeinträchtigungsgrads (100) umfassend:

einen Teil zur Erfassung von Verfügbarkeitsinformationen (48), der konfiguriert ist, Verfügbarkeitsinformationen zu erlangen, die eine Verfügbarkeit von jeder der hydraulischen Kammern (30) in einem Bewertungszeitraum angeben, einen Teil zur Bewertung des gesamten kumulativen Beeinträchtigungsgrads (50), der konfiguriert ist, einen gesamten kumulativen Beeinträchtigungsgrad über den gesamten Bewertungszeitraum hinweg von jedem der Bewertungspunkte des Zylinderblocks (24) basierend auf den Verfügbarkeitsinformationen, die durch den Teil zur Erfassung von Verfügbarkeitsinformationen (48) erlangt werden, zu bewerten, und einen Steuerteil (52), der konfiguriert ist, mindestens eines der mehreren Hochdruckventile (36) oder der mehreren Niederdruckventile (38) gemäß einem Betriebsmuster der mehreren hydraulischen Kammern (30) in dem Zylinderblock (24) zu steuern,

wobei, wenn der gesamte kumulative Beeinträchtigungsgrad über den gesamten Bewertungszeitraum hinweg von mindestens einem der Bewertungspunkte des Zylinderblocks (24) größer als ein Schwellenwert ist, der Steuerteil (52) konfiguriert ist, das Betriebsmuster zu bestimmen, bei dem eine Konzentration der Belastung auf den mindestens einen Bewertungspunkt, an dem der kumulative Beeinträchtigungsgrad höher als der Schwellenwert ist, vermeidbar ist.

2. System zur Bewertung eines kumulativen Beeinträchtigungsgrads (100) nach Anspruch 1, wobei der Steuerteil (52) konfiguriert ist, ein Benachrichtigungssignal zur Warnung zu erzeugen, wenn eine zunehmende Geschwindigkeit des gesamten kumulativen Beeinträchtigungsgrads über den gesamten Bewertungszeitraum hinweg von mindestens einem der Bewertungspunkte des Zylinderblocks (24) größer als ein Schwellenwert ist.

3. System zur Bewertung eines kumulativen Beeinträchtigungsgrads (100) nach Anspruch 1 oder 2, wobei der Steuerteil (52) konfiguriert ist, eine Verdrängung der hydraulischen Maschine durch Anpassen von F(x), das ein Verhältnis von "n - x" zu "n" angibt, in jedem Einheitszeitraum zu steuern, wobei "n" die Gesamtanzahl der hydraulischen Kammern (30) ist und "x" die Anzahl der hydraulischen Kammern (30) ist, die während eines Zyklus, in dem sich der entsprechende Kolben (20) von einem unteren Totpunkt zu einem oberen Totpunkt bewegt und erneut zu dem unteren Totpunkt zurückkehrt, einen Zustand beibehalten, in welchem das entsprechende Hochdruckventil (36) geschlossen ist und das entsprechende Niederdruckventil (38) geöffnet ist, und wobei das System zur Bewertung eines kumulativen Beeinträchtigungsgrads (100) ferner einen Teil zur Berechnung des kumulativen Beeinträchtigungsgrads (54) umfasst, der konfiguriert ist, einen kumulativen Beeinträchtigungsgrad $DF_{F(x)}$ von jedem Bewertungspunkt für jedes Verhältnis F(x) in dem Einheitszeitraum zu berechnen,

wobei der Teil zur Erfassung von Verfügbarkeitsinformationen (48) konfiguriert ist, die Verfügbarkeitsinformationen einschließlich der Häufigkeit des Auftretens $f_{F(x)}$ von jedem Verhältnis F(x) über den gesamten Bewertungszeitraum hinweg zu erlangen, und

wobei der Teil zur Bewertung des gesamten kumulativen Beeinträchtigungsgrads (50) konfiguriert ist, den gesamten kumulativen Beeinträchtigungsgrad $DF_{total}$ über den gesamten Bewertungszeitraum hinweg von jedem Bewertungspunkt des Zylinderblocks (24) basierend auf folgendem Ausdruck zu bewerten.

$$DF_{total} = \sum \left( DF_{F(x)} \times f_{F(x)} \right)$$

4. System zur Bewertung eines kumulativen Beeinträchtigungsgrads (100) nach Anspruch 3, ferner umfassend
einen Teil zur Berechnung von Belastungsinformationen (56), der konfiguriert ist, eine Häufigkeit des Auftretens eines Belastungsdurchschnittswerts und einer Belastungsamplitude eines jeden Auswertungspunkts des Zylinderblocks (24) für jedes Verhältnis F(x) in dem Einheitszeitraum zu berechnen, wobei der Teil zur Berechnung des kumulativen Beeinträchtigungsgrads (54) konfiguriert ist, den kumulativen Beeinträchtigungsgrad $DF_{F(x)}$ basierend auf einem Berechnungsergebnis des Teils zur Berechnung von Belastungsinformationen (56) und einem Dauerfestigkeitsdiagramm entsprechend einem Material von jedem Bewertungspunkt des Zylinderblocks (24) zu berechnen.

5. System zur Bewertung eines kumulativen Beeinträchtigungsgrads (100) nach Anspruch 4,
wobei der Teil zur Berechnung von Belastungsinformationen (56) konfiguriert ist, die Häufigkeit des Auftretens des Belastungsdurchschnittswerts und der Belastungsamplitude für jedes Verhältnis F(x) in dem Einheitszeitraum an jedem Bewertungspunkt des Zylinderblocks (24) basierend auf Informationen zu berechnen, die eine vorübergehende Veränderung der Belastung für jedes Verhältnis F(x) in dem Einheitszeitraum an jedem Bewertungspunkt des Zylinderblocks (24) angeben.

6. System zur Bewertung eines kumulativen Beeinträchtigungsgrads (100) nach Anspruch 5, ferner umfassend:

einen Lasterfassungsteil (58), der konfiguriert ist, eine vorübergehende Veränderung mehrerer Lasten, die auf den Zylinderblock (24) ausgeübt werden, für jedes Verhältnis F(x) in dem Einheitszeitraum zu erlangen, und
einen Teil zur Berechnung einer vorübergehenden Veränderung der Belastung (60), der konfiguriert ist, Informationen, die die vorübergehende Veränderung der Belastung für jedes Verhältnis F(x) in dem Einheitszeitraum an jedem Bewertungspunkt des Zylinderblocks (24) anzeigen, basierend auf der Belastung, die auf jedem Bewertungspunkt des Zylinderblocks (24), der für jede Last der mehreren Lasten analysiert wird, erzeugt wird, und der vorübergehenden Veränderung der mehreren Lasten, die für jedes Verhältnis F(x) durch den Teil zur Erfassung der Last erlangt wird, zu berechnen.

7. System zur Bewertung eines kumulativen Beeinträchtigungsgrads (100) nach Anspruch 6, ferner umfassend mindestens eine Messeinheit (62) zum Messen der vorübergehenden Veränderung der mehreren Lasten für jedes Verhältnis F(x) oder eine Speichereinheit (64) zum Speichern der vorübergehenden Veränderung der mehreren Lasten für jedes Verhältnis F(x),
wobei der Teil zur Erfassung der Last (58) konfiguriert ist, die vorübergehende Veränderung der mehreren Lasten für jedes Verhältnis F(x) von der Messeinheit (62) oder der Speichereinheit (64) zu erlangen.

8. System zur Bewertung eines kumulativen Beeinträchtigungsgrads (100) nach Anspruch 6 oder 7,
wobei die mehreren Lasten mindestens eine Last, die durch einen Differenzdruck über die Hochdruckventile (36) hinweg erzeugt wird, und eine Last, die durch einen Differenzdruck über die Niederdruckventile (38) hinweg erzeugt wird, beinhalten.

9. System zur Bewertung eines kumulativen Beeinträchtigungsgrads (100) nach einem der Ansprüche 1 bis 8,
wobei die Bewertungspunkte des Zylinderblocks (24) mindestens einen Abschnitt der Hochdruckventile (36), einen Abschnitt der Niederdruckventile (38) und einen Abschnitt der Zylinder (22) beinhalten.

**10.** System zur Bewertung eines kumulativen Beeinträchtigungsgrads (100) nach einem der Ansprüche 1 bis 9,
wobei der Bewertungszeitraum einen Zeitraum von einer aktuellen Zeit zu einer nächsten Wartung beinhaltet.

**11.** Vorrichtung zur Stromerzeugung aus erneuerbarer Energie (1), die Strom aus erneuerbarer Energie erzeugt, umfassend:

eine Drehwelle (6), die konfiguriert ist, durch erneuerbare Energie angetrieben zu werden,
eine Hydraulikpumpe (8), die konfiguriert ist, durch die Drehwelle (6) angetrieben zu werden,
einen Hydraulikmotor (10), der konfiguriert ist, durch Drucköl, das von der Hydraulikpumpe (8) zugeführt wird, angetrieben zu werden,
einen Generator (16), der mit dem Hydraulikmotor (10) verbunden ist, und
das System zur Bewertung eines kumulativen Beeinträchtigungsgrads (100) nach Anspruch 1 bis 10,
wobei das System zur Bewertung eines kumulativen Beeinträchtigungsgrads (100) für die Hydraulikpumpe (8) oder den Hydraulikmotor (10) vorgesehen ist.

**12.** Vorrichtung zur Stromerzeugung aus erneuerbarer Energie (1) nach Anspruch 11, wobei die erneuerbare Energie Windenergie ist.

**13.** Verfahren zur Bewertung eines kumulativen Beeinträchtigungsgrads einer hydraulischen Maschine (8, 10), die mehrere Kolben (20) und mindestens einen Zylinderblock (24) mit mehreren Zylindern (22) zur Ausbildung mehrerer hydraulischer Kammern (30) mit den mehreren Kolben (20) und zur Führung einer Hin- und Herbewegung der jeweiligen Kolben (20) und mehrere Hochdruckventile (36) und mehrere Niederdruckventile (38) zum Schalten eines Drucks von jeder der mehreren hydraulischen Kammern (30) beinhaltet, das Verfahren umfassend:

einen Erfassungsschritt des Erlangens von Verfügbarkeitsinformationen, die eine Verfügbarkeit von eines jeden Zylinders (22) in einem Bewertungszeitraum angeben,
einen Bewertungsschritt des Bewertens eines kumulativen Beeinträchtigungsgrads in dem Bewertungszeitraum an jedem der Bewertungspunkte des Zylinderblocks (24) basierend auf den im Erfassungsschritt erlangten Verfügbarkeitsinformationen,
wobei die hydraulische Maschine (8, 10) eine Verdrängung der hydraulischen Maschine durch Anpassen von F(x), das ein Verhältnis von "n - x" zu "n" angibt, in jedem Einheitszeitraum steuert, wobei "n" die Gesamtanzahl der hydraulischen Kammern (30) ist und "x" die Anzahl der hydraulischen Kammern (30) ist, die während eines Zyklus, in dem sich der entsprechende Kolben (20) von einem unteren Totpunkt zu einem oberen Totpunkt bewegt und erneut zu dem unteren Totpunkt zurückkehrt, einen Zustand beibehalten, in welchem das entsprechende Hochdruckventil (36) geschlossen ist und das entsprechende Niederdruckventil (38) geöffnet ist, und
wobei das System zur Bewertung eines kumulativen Beeinträchtigungsgrads (100) in dem Bewertungsschritt ferner einen Teil zur Berechnung des kumulativen Beeinträchtigungsgrads (54) umfasst, der einen kumulativen Beeinträchtigungsgrad $DF_{F(x)}$ von jedem Bewertungspunkt für jedes Verhältnis F(x) in dem Einheitszeitraum berechnet,
wobei der Teil zur Erfassung von Verfügbarkeitsinformationen (48) die Verfügbarkeitsinformationen einschließlich der Häufigkeit des Auftretens $f_{F(x)}$ von jedem Verhältnis F(x) über den gesamten Bewertungszeitraum hinweg erlangt, und
wobei der Teil zur Bewertung des gesamten kumulativen Beeinträchtigungsgrads (50) den gesamten kumulativen Beeinträchtigungsgrad $DF_{total}$ über den gesamten Bewertungszeitraum hinweg von jedem Bewertungspunkt des Zylinderblocks (24) basierend auf folgendem Ausdruck bewertet

$$DF_{total} = \sum \left( DF_{F(x)} \times f_{F(x)} \right)$$

**14.** Verfahren zur Steuerung einer hydraulischen Maschine (8, 10), die mehrere Kolben (20), eine Steuerung und mindestens einen Zylinderblock (24) mit mehreren Zylindern (22) zur Ausbildung mehrerer hydraulischer Kammern (30) mit den mehreren Kolben (20) und zur Führung einer Hin- und Herbewegung der jeweiligen Kolben (20) und mehrere Hochdruckventile (36) und mehrere Niederdruckventile (38) zum Schalten eines Drucks von jeder der mehreren hydraulischen Kammern (30) beinhaltet, das Verfahren umfassend:

einen Bewertungsschritt des Bewertens eines kumulativen Beeinträchtigungsgrads in dem Bewertungszeitraum von jedem der Bewertungspunkte des Zylinderblocks (24), der durch das Verfahren nach Anspruch 13 durchgeführt wird, und
einen Steuerschritt des Durchführens, wenn der kumulative Beeinträchtigungsgrad von mindestens einem der Bewertungspunkte des Zylinderblocks (24) in dem Bewertungszeitraum, der in dem Bewertungsschritt bewertet wird, einen Schwellenwert überschritten hat, einer Steuerung zum Vermeiden einer Konzentration der Belastung auf den mindestens einen Bewertungspunkt, an dem der kumulative Beeinträchtigungsgrad den Schwellenwert überschritten hat.

## Revendications

1. Système d'évaluation de niveau de dommage cumulatif (100) pour une machine hydraulique (8, 10) qui comprend une pluralité de pistons (20) et au moins un bloc de cylindres (24) comprenant une pluralité de cylindres (22) pour former une pluralité de chambres hydrauliques (30) avec la pluralité de pistons (20) et guider un mouvement de va-et-vient des pistons respectifs (20) et une pluralité de soupapes à haute pression (36) et une pluralité de soupapes à basse pression (38) pour commuter une pression de chacune de la pluralité de chambres hydrauliques (30), le système d'évaluation de niveau de dommage cumulatif (100) comportant :

   une partie d'acquisition d'information de disponibilité (48) configurée pour obtenir de l'information de disponibilité qui indique une disponibilité de chacune des chambres hydrauliques (30) dans une période d'évaluation ;
   une partie d'évaluation de niveau de dommage cumulatif total (50) configurée pour évaluer un niveau de dommage cumulatif total au cours de la période d'évaluation entière de chacun de points d'évaluation du bloc de cylindres (24) sur la base de l'information de disponibilité obtenue par la partie d'acquisition d'information de disponibilité (48), et
   une partie de commande (52) configurée pour commander au moins une de la pluralité de soupapes à haute pression (36) ou de la pluralité de soupapes à basse pression (38) en fonction d'un modèle de fonctionnement de la pluralité de chambres hydrauliques (30) dans le bloc de cylindres (24),
   dans lequel, quand le niveau de dommage cumulatif total au cours de la période d'évaluation entière d'au moins un des points d'évaluation du bloc de cylindres (24) est plus grand qu'une valeur de seuil, la partie de commande (52) est configurée pour déterminer le modèle de fonctionnement dans lequel une concentration de contrainte sur le au moins un point d'évaluation au niveau duquel le niveau de dommage cumulatif est plus grand que la valeur de seuil peut être évitée.

2. Système d'évaluation de niveau de dommage cumulatif (100) selon la revendication 1, dans lequel la partie de commande (52) est configurée pour générer un signal de notification pour avertir quand une vitesse d'augmentation du niveau de dommage cumulatif total au cours de la période d'évaluation entière d'au moins un des points d'évaluation du bloc de cylindres (24) est plus grande qu'une valeur de seuil.

3. Système d'évaluation de niveau de dommage cumulatif (100) selon la revendication 1 ou 2, dans lequel la partie de commande (52) est configurée pour commander un déplacement de la machine hydraulique en ajustant F(x) qui indique un taux de « n-x » à « n » dans chaque période unitaire, où « n » est le nombre total des chambres hydrauliques (30) et « x » est le nombre de chambres hydrauliques (30) qui conservent un état dans lequel la soupape à haute pression correspondante (36) est fermée et la soupape à basse pression correspondante (38) est ouverte pendant un cycle dans lequel le piston correspondant (20) se déplace depuis un point mort bas jusqu'à un point mort haut et revient de nouveau au point mort bas, et
   dans lequel le système d'évaluation de niveau de dommage cumulatif (100) comporte en outre une partie de calcul de niveau de dommage cumulatif (54) configurée pour calculer un niveau de dommage cumulatif $DF_{F(x)}$ de chaque point d'évaluation pour chaque taux $F(x)$ pendant la période unitaire,
   dans lequel la partie d'acquisition d'information de disponibilité (48) est configurée pour obtenir l'information de disponibilité comprenant une fréquence d'occurrence $f_{F(x)}$ de chaque taux $F(x)$ au cours de la période d'évaluation entière, et
   dans lequel la partie d'évaluation de niveau de dommage cumulatif total (50) est configurée pour évaluer le niveau de dommage cumulatif total $DF_{total}$ au cours de la période d'évaluation entière de chaque point d'évaluation du bloc de cylindres (24) sur la base d'une expression suivante.

$$DF_{total} = \Sigma (DF_{F(x)} \; X \; f_{F(x)})$$

4. Système d'évaluation de niveau de dommage cumulatif (100) selon la revendication 3, comportant en outre
   une partie de calcul d'information de contrainte (56) configurée pour calculer une fréquence d'occurrence d'une valeur moyenne de contrainte et d'une amplitude de contrainte de chaque point d'évaluation du bloc de cylindres (24) pour chaque taux F(x) pendant la période unitaire,
   dans lequel la partie de calcul de niveau de dommage cumulatif (54) est configurée pour calculer le niveau de dommage cumulatif $DF_{F(x)}$ sur la base d'un résultat de calcul de la partie de calcul d'information de contrainte (56) et d'un diagramme de fatigue-résistance correspondant à un matériau de chaque point d'évaluation du bloc de cylindres (24).

5. Système d'évaluation de niveau de dommage cumulatif (100) selon la revendication 4,
dans lequel la partie de calcul d'information de contrainte (56) est configurée pour calculer la fréquence d'occurrence de la valeur moyenne de contrainte et de l'amplitude de contrainte pour chaque taux F(x) pendant la période unitaire à chaque point d'évaluation du bloc de cylindres (24) sur la base de l'information qui indique un changement temporel de contrainte pour chaque taux F(x) pendant la période unitaire à chaque point d'évaluation du bloc de cylindres (24).

6. Système d'évaluation de niveau de dommage cumulatif (100) selon la revendication 5, comportant en outre :

   une partie d'acquisition de charge (58) configurée pour obtenir un changement temporel d'une pluralité de charges appliquées sur le bloc de cylindres (24) pour chaque taux F(x) pendant la période unitaire ; et
   une partie de calcul de changement temporel de contrainte (60) configurée pour calculer de l'information qui indique le changement temporel de contrainte pour chaque taux F(x) pendant la période unitaire à chaque point d'évaluation du bloc de cylindres (24), sur la base de la contrainte générée sur chaque point d'évaluation du bloc de cylindres (24) analysé pour chaque charge unitaire de la pluralité de charges et du changement temporel de la pluralité de charges obtenu pour chaque taux F(x) par la partie d'acquisition de charge.

7. Système d'évaluation de niveau de dommage cumulatif (100) selon la revendication 6, comportant en outre au moins une d'une unité de mesure (62) destinée à mesurer le changement temporel de la pluralité de charges pour chaque taux F(x) ou d'une unité de stockage (64) qui stocke le changement temporel de la pluralité de charges pour chaque taux F(x),
dans lequel la partie d'acquisition de charge (58) est configurée pour obtenir le changement temporel dans la pluralité de charges pour chaque taux F(x) à partir de l'unité de mesure (62) ou de l'unité de stockage (64).

8. Système d'évaluation de niveau de dommage cumulatif (100) selon la revendication 6 ou 7,
dans lequel la pluralité de charges comprend au moins un charge provoquée par une pression différentielle à travers les soupapes à haute pression (36) et une charge provoquée par une pression différentielle à travers les soupapes à basse pression (38).

9. Système d'évaluation de niveau de dommage cumulatif (100) selon l'une quelconque des revendications 1 à 8,
dans lequel les points d'évaluation du bloc de cylindres (24) comprennent au moins une partie des soupapes à haute pression (36), une partie des soupapes à basse pression (38), et une partie des cylindres (22).

10. Système d'évaluation de niveau de dommage cumulatif (100) selon l'une quelconque des revendications 1 à 9,
dans lequel la période d'évaluation comprend une période depuis un temps courant jusqu'à un entretien suivant.

11. Appareil de génération d'énergie à énergie renouvelable (1) qui génère de l'énergie électrique à partir d'une énergie renouvelable, comportant :

   un arbre de rotation (6) configuré pour être entraîné par de l'énergie renouvelable ;
   une pompe hydraulique (8) configurée pour être entraînée par l'arbre de rotation (6) ;
   un moteur hydraulique (10) configuré pour être entraîné par de l'huile sous pression délivrée par la pompe hydraulique (8) ;
   une génératrice (16) reliée au moteur hydraulique (10) ; et
   le système d'évaluation de niveau de dommage cumulatif (100) selon la revendication 1 à 10,
   dans lequel le système d'évaluation de niveau de dommage cumulatif (100) est pour la pompe hydraulique (8) ou pour le moteur hydraulique (10).

12. Appareil de génération d'énergie à énergie renouvelable (1) selon la revendication 11, dans lequel l'énergie renouvelable est de l'énergie éolienne.

13. Procédé d'évaluation d'un niveau de dommage cumulatif d'une machine hydraulique (8, 10) qui comprend une pluralité de pistons (20) et au moins un bloc de cylindres (24) comprenant une pluralité de cylindres (22) pour former une pluralité de chambres hydrauliques (30) avec la pluralité de pistons (20) et guider un mouvement de va-et-vient des pistons respectifs (20) et une pluralité de soupapes à haute pression (36) et une pluralité de soupapes à basse pression (38) pour commuter une pression de chacune de la pluralité de chambres hydrauliques (30), le procédé comportant :

une étape d'acquisition pour obtenir de l'information de disponibilité qui indique une disponibilité de chaque cylindre (22) dans une période d'évaluation ;

une étape d'évaluation pour évaluer un niveau de dommage cumulatif dans la période d'évaluation au niveau de chacun de points d'évaluation du bloc de cylindres (24) sur la base de l'information de disponibilité obtenue dans l'étape d'acquisition,

selon lequel la machine hydraulique (8, 10) commande un déplacement de la machine hydraulique en ajustant F(x) qui indique un taux de « n-x » à « n » dans chaque période unitaire, où « n » est le nombre total des chambres hydrauliques (30) et « x » est le nombre de chambres hydrauliques (30) qui conservent un état dans lequel la soupape à haute pression correspondante (36) est fermée et la soupape à basse pression correspondante (38) est ouverte pendant un cycle dans lequel le piston correspondant (20) se déplace depuis un point mort bas jusqu'à un point mort haut et revient de nouveau au point mort bas, et

selon lequel, dans l'étape d'évaluation, le système d'évaluation de niveau de dommage cumulatif (100) comporte en outre une partie de calcul de niveau de dommage cumulatif (54) qui calcule un niveau de dommage cumulatif $DF_{F(x)}$ de chaque point d'évaluation pour chaque taux F(x) pendant la période unitaire,

selon lequel la partie d'acquisition d'information de disponibilité (48) obtient l'information de disponibilité comprenant une fréquence d'occurrence $f_{F(x)}$ de chaque taux F (x) au cours de la période d'évaluation entière, et

selon lequel la partie d'évaluation de niveau de dommage cumulatif total (50) évalue le niveau de dommage cumulatif total $DF_{total}$ au cours de la période d'évaluation entière de chaque point d'évaluation du bloc de cylindres (24) sur la base d'une expression suivante

$$DF_{total} = \Sigma (DF_{F(x)} \ X \ f_{F(x)})$$

14. Procédé de commande d'une machine hydraulique (8, 10) qui comprend une pluralité de pistons (20), un circuit de commande et au moins un bloc de cylindres (24) comprenant une pluralité de cylindres (22) pour former une pluralité de chambres hydrauliques (30) avec la pluralité de pistons (20) et guider un mouvement de va-et-vient des pistons respectifs (20) et une pluralité de soupapes à haute pression (36) et une pluralité de soupapes à basse pression (38) pour commuter une pression de chacune de la pluralité de chambres hydrauliques (30), le procédé comportant :

une étape d'évaluation pour évaluer un niveau de dommage cumulatif dans la période d'évaluation de chacun de points d'évaluation du bloc de cylindres (24), qui est réalisée par le procédé selon la revendication 13 ; et

une étape de commande pour réaliser, quand le niveau de dommage cumulatif d'au moins un des points d'évaluation du bloc de cylindres (24) pendant la période d'évaluation évalué dans l'étape d'évaluation a dépassé une valeur de seuil, une commande destinée à éviter une concentration de contrainte sur le au moins un point d'évaluation au niveau duquel le niveau de dommage cumulatif a dépassé la valeur de seuil.

# FIG. 1

## FIG. 2

# FIG. 3

# FIG. 4

Cumulative damage level evaluation system — 100

48 — Availability information acquisition part

52 — Control part

50 — Total cumulative damage level evaluation part

62 — Measurement unit

54 — Cumulative damage level evaluation part

64 — Storage unit

56 — Stress information calculation part

66 — Display part

58 — Load acquisition part

60 — Stress temporal-change calculation part

FIG. 5

FIG. 6

# FIG. 7A

Rotation angle of hydraulic pump rotation shaft [deg]

# FIG. 7B

Rotation angle of hydraulic pump rotation shaft [deg]

# FIG. 8

Start

Stress analysis by load — S11

Temporal change of each load for every F(x)

Calculate stresstemporal change of each evaluation point for every F(x) — S12

Calculate occurrence frequency of stress average value and stress amplitude of each evaluation point for every F(x) — S13

Fatigue-strength chart corresponding to material of each evaluation point

Calculate cumulative damage level of each evaluation point for every F(x) — S14

Occurrence frequency for every F(x)

Calculate total cumulative damage level of each evaluation point — S15

End

FIG. 9

# FIG. 10

EP 2 952 781 B1

# FIG. 11

Calculate total cumulative
damage level of each
evaluation point — S15

Increasing speed
of total cumulative
damage level of > threshold? — S16
at least one
evaluation point

Yes → Start alarm — S17

No

Total cumulative
damage level of
at least one > threshold? — S19
evaluation point

Yes →

No

Execute control for avoiding
stress concentration — S18

**EP 2 952 781 B1**

**Patent documents cited in the description**

- WO 2014002522 A

- WO 2006124746 A